# FASCICULE DE BREVET EUROPEEN

(11) **EP 4 375 139 B1**
(45) Date de publication et mention de la délivrance du brevet: **20.05.2026**
(21) Numéro de dépôt: 23211460.3
(22) Date de dépôt: 22.11.2023
(51) Int. Cl.: B60P 3/06, B60P 3/077, B62D 63/06

(54) **REMORQUE DE TRANSPORT**
TRANSPORTANHÄNGER
TRANSPORT TRAILER

(30) Priorité: 25.11.2022 FR 2212335
(43) Date de publication de la demande: 29.05.2024
(73) Titulaire: MANITOU BF, 44150 Ancenis (FR)
(72) Inventeur: MERTEN, Hervé, 44150 ANCENIS (FR); MORON, Mickaël, 44150 ANCENIS (FR)
(74) Mandataire: Loyer & Abello

(56) Documents cités:
- DE-U1- 202017 101 901
- FR-A1- 3 117 443
- US-A1- 2010 232 901

## Description

### Domaine technique

L'invention se rapporte au domaine des remorques de transport. Plus particulièrement l'invention se rapporte au domaine du transport de machines de levage. Encore plus particulièrement l'invention se rapporte au domaine du transport de machines de levage à trois roues. Un exemple d'un remorque apte à transporter de telles machines est connu de US 2010/232901 A1.

### Arrière-plan technologique

Il existe des restrictions législatives limitant l'utilisation d'une remorque tractée par un véhicule. En particulier, il est courant qu'un véhicule tractant une remorque soit limité à un poids total roulant autorisé (PTRA). En cas infraction à une de ces limitations, le conducteur encourt des sanctions.

La charge utile d'une remorque est donc limitée par la masse à vide de la remorque et la limite de poids total réglementaire autorisé. Ainsi, plus la masse d'une remorque vide est importante, plus la charge utile diminue car la masse restante pour atteindre le poids total autorisé est diminuée.

En conséquence, le reste de charge disponible du poids total autorisé ne permet pas de déplacer des machines de levage car elles sont trop lourdes et dépasseraient donc le poids total roulant autorisé.

Outre ces considérations législatives, il peut s'avérer dangereux de conduire un véhicule comprenant une remorque présentant une masse importante. En effet, il se peut que les éléments constituant le véhicule ne soient pas adaptés pour une telle charge.

Une telle situation pourrait alors engendrer des difficultés pour maitriser le véhicule durant un trajet et donc entrainer des accidents.

### Résumé de l'invention

Les inventeurs ont constaté qu'il n'existe pas de remorque présentant une faible masse à vide et une forte charge utile qui soit optimisée pour le transport d'une machine de levage comprenant trois roues. En effet, les machines de levage comprenant trois roues présentent une difficulté particulière qui est qu'elles présentent généralement une largeur importante.

Une idée à la base de l'invention est de résoudre les problèmes susmentionnés.

Une autre idée à la base de l'invention est de permettre le transport d'une machine de levage via un véhicule léger.

Une autre idée à la base de l'invention est de limiter le poids d'une remorque pour le transport d'une machine de levage.

Une idée à la base de l'invention est de réaliser une remorque structurellement optimisée pour recevoir une machine de levage à trois roues tout en présentant une faible masse.

Selon un mode de réalisation, l'invention fournit une remorque de transport pour transporter une machine de levage, la machine de levage comprenant deux premières roues espacées dans une direction transversale de la machine de levage et une troisième roue espacée des premières roues dans une direction longitudinale de la machine de levage et située entre les premières roues dans la direction transversale de la machine de levage, la remorque comprenant :
- au moins un essieu comportant au moins deux roues espacées dans une direction transversale de la remorque,
- un châssis porté par l'au moins un essieu, le châssis étant muni d'un crochet d'attelage disposé à une extrémité longitudinale avant de la remorque et destiné à être attelé à un véhicule,
- deux rails latéraux espacés dans la direction transversale de la remorque et montés sur le châssis de manière à chevaucher respectivement lesdites roues de la remorque, les deux rails latéraux étant destinés à supporter respectivement les deux premières roues de la machine de levage, et
- un rail central monté sur le châssis, le rail central étant situé entre les deux rails latéraux dans la direction transversale de la remorque et destiné à supporter la troisième roue de la machine de levage,
dans laquelle chacun des deux rails latéraux s'étend selon une direction longitudinale de la remorque et comporte une portion plane formant un garde-boue au-dessus d'une dite roue de la remorque et une portion montante pour arrêter une dite première roue de la machine de levage en direction de l'extrémité longitudinale avant de la remorque, dans laquelle le rail central comporte dans une direction longitudinale de la remorque : une portion plane pour supporter la troisième roue de la machine de levage et une portion montante pour arrêter la troisième roue de la machine de levage en direction de l'extrémité longitudinale avant de la remorque.

Grâce à ces caractéristiques, la remorque est spécifiquement adaptée pour porter la machine de levage à trois roues. En effet, lorsque la machine de levage est chargée sur la remorque, les deux premières roues sont respectivement positionnée sur un des deux rails latéraux et la troisième roue est positionné sur le rail central. En conséquence de cet arrangement, la remorque est plus légère.

Selon des modes de réalisation, une telle remorque peut comporter une ou plusieurs des caractéristiques suivantes.

Selon un mode de réalisation, chacun des deux rails latéraux comporte successivement, depuis une extrémité longitudinale arrière de la remorque en direction de l'extrémité longitudinale avant de la remorque : une rampe tournée vers l'arrière destinée à engager une dite première roue de la machine de levage, la portion plane et la portion montante et dans laquelle le rail central comporte successivement depuis une extrémité longitudinale arrière de la remorque en direction de l'extrémité longitudinale avant de la remorque une rampe tournée vers l'arrière destinée à engager la roue indépendante, la portion plane et la portion montante.

Ainsi, la machine de levage peut être chargée sur la remorque en marche avant, c'est-à-dire que les deux premières roues vont chacune s'engager sur un rail latéral puis la roue arrière va ensuite être positionnée sur le rail central.

Selon un mode de réalisation, chacun des deux rails latéraux est monté à pivot sur le châssis, la rampe tournée vers l'arrière étant destinée à prendre appui sur le sol dans une position inclinée du rail latéral et à être élevée au-dessus du sol dans une position redressée du rail latéral.

Ainsi, la position inclinée permet de faciliter le chargement de la machine de levage sur la remorque. En outre, au fur et à mesure que la machine de levage est chargée sur la remorque, chaque rail latéral passe de la position inclinée à la position redressée du rail.

Selon un mode de réalisation, la rampe du rail latéral présente une orientation inclinée par rapport à la portion plane du rail latéral.

Ainsi, le chargement de la machine de levage est facilité.

Selon un mode de réalisation, le rail central est espacé des deux rails latéraux.

Selon un mode de réalisation, le rail central est monté à pivot sur le châssis, la rampe tournée vers l'arrière étant destinée à prendre appui sur le sol dans une position inclinée du rail central et à être élevée au-dessus du sol dans une position redressée du rail central.

Selon un mode de réalisation, la rampe présente une orientation inclinée par rapport à la portion plane du rail central.

Selon un mode de réalisation, la remorque comporte un plateau d'engagement lié à une extrémité longitudinale arrière du châssis, le plateau d'engagement s'étendant selon la direction transversale sur toute largeur de la remorque afin de permettre l'engagement des premières roues sur respectivement le premier rail latéral et le deuxième rail latéral et permettre l'engagement de la troisième roue sur le rail central.

Selon un mode de réalisation, chacun des deux rails latéraux comporte, successivement depuis le plateau d'engagement en direction de l'extrémité longitudinale avant de la remorque, la portion montante et la portion plane et dans laquelle le rail central comporte, successivement depuis le plateau d'engagement en direction de l'extrémité longitudinale avant de la remorque, la portion plane et la portion montante.

Selon un mode de réalisation, chacun des deux rails latéraux comporte, successivement depuis le plateau d'engagement en direction de l'extrémité longitudinale avant de la remorque, la portion plane et la portion montante et dans laquelle le rail central comporte, successivement depuis le plateau d'engagement en direction de l'extrémité longitudinale avant de la remorque, la portion plane et la portion montante.

Selon un mode de réalisation, le plateau d'engagement est monté à pivot sur le châssis de manière à permettre l'abaissement et le levage dudit plateau d'engagement afin de faciliter le chargement et le déchargement de la machine de levage.

Selon un mode de réalisation, le rail central est solidaire du plateau d'engagement pour pivoter avec le plateau d'engagement.

Selon un mode de réalisation, chacun des deux rails latéraux est solidaire du plateau d'engagement pour pivoter avec le plateau d'engagement.

Selon un mode de réalisation, au moins une des portions montantes est précédée d'une portion descendante en direction de l'extrémité longitudinale avant de la remorque pour former un berceau destiné à recevoir une dite roue de la machine de levage dans une position stable. Selon un mode de réalisation, la portion montante du rail central est précédée d'une portion descendante en direction de l'extrémité longitudinale avant de la remorque pour former un berceau destiné à recevoir la troisième roue de la machine de levage dans une position stable. Selon un mode de réalisation, la portion montante de chaque rail latéral est précédée d'une portion descendante en direction de l'extrémité longitudinale avant de la remorque pour former un berceau destiné à recevoir une dite première roue de la machine de levage dans une position stable.

Selon un mode de réalisation, chacun des deux rails latéraux comporte un premier rebord longitudinal espacé d'un deuxième rebord longitudinal, le premier rebord longitudinal et le deuxième rebord longitudinal faisant chacun saillie depuis la portion plane et la portion montante et formant un couloir de réception pour une dite première roue de la machine de levage.

Grâce à ces caractéristiques, la remorque permet un guidage latéral de la machine de levage afin de la sécuriser et diminuer le risque d'accidents telle qu'une chute de la machine de levage.

Selon un mode de réalisation, le premier rebord longitudinal est parallèle au deuxième rebord longitudinal.

Selon un mode de réalisation, chacun des deux rails latéraux comporte des ancrages pour ancrer des sangles d'arrimage destinées à maintenir la machine de levage sur la remorque. Selon un mode de réalisation, les ancrages comportent par exemple un orifice traversant ménagé dans le rail latéral ou une patte saillante fixée à un rebord longitudinal. Par exemple les sangles peuvent coopérer avec les roues et/ou avec le corps de la machine de levage.

Similairement, le rail central peut comporter un ancrage pour ancrer des sangles d'arrimage destinées à maintenir la machine de levage sur la remorque.

Selon un mode de réalisation, la portion montante de chacun des deux rails latéraux est située entre l'essieu et l'extrémité longitudinale avant de la remorque, la portion montante du rail central étant située vers l'arrière de la remorque par rapport à la portion montante de chacun des deux rails latéraux.

Selon un mode de réalisation, la portion montante du rail central est située entre l'essieu et l'extrémité longitudinale avant de la remorque, la portion montante de chacun des deux rails latéraux étant située vers l'arrière de la remorque par rapport à la portion montante du rail central.

Selon un mode de réalisation, l'essieu comporte en outre une paire de roues supplémentaire espacées dans une direction transversale de la remorque.

Selon un mode de réalisation, la remorque comprend un deuxième essieu comportant une paire de roues espacées dans une direction transversale de la remorque, et situé à distance de la première paire de roues selon la direction longitudinale de la remorque.

Selon un mode de réalisation, la remorque de transport est apte à transporter un chariot élévateur embarqué à trois roues du type TMM (Chariots élévateurs à mât) ou TMT (Chariots élévateurs à fourche télescopique).

Selon un mode de réalisation, la remorque est formée d'un seul tenant. C'est-à-dire que le ou chaque essieu, les deux rails latéraux et le rail central sont solidaires et fixés au châssis.

Selon un mode de réalisation de la remorque, les espaces formés entre respectivement chacun des deux rails latéraux et le rail central ne contiennent pas d'élément supplémentaire. C'est-à-dire que le châssis porte seulement les deux rails latéraux et le rail central.

Selon un mode de réalisation, la remorque présente une symétrie axiale selon un axe longitudinal de la remorque.

Selon un mode de réalisation, le châssis et les rails de la remorque sont réalisés en acier.

Selon un mode de réalisation, la remorque présente une masse inférieure à 1000 kg, préférentiellement comprise entre 400 kg et 900 kg, plus préférentiellement d'environ 600 kg.

Ainsi, la remorque est adaptée pour être attelée à un véhicule léger.

Selon un mode de réalisation, la remorque présente une largeur inférieure ou égale au gabarit routier.

Selon un mode de réalisation, la remorque est destinée à être attelée à un véhicule choisi parmi : une voiture de tourisme et un véhicule utilitaire et un camion.

Selon un mode de réalisation, l'invention fournit aussi un ensemble constitué d'une remorque selon un des modes de réalisation indiqués ci-dessus et d'une machine de levage portée par la remorque, la machine de levage comprenant deux premières roues espacées dans une direction transversale de la machine de levage et une troisième roue espacée des premières roues dans une direction longitudinale de la machine de levage et située entre les premières roues dans la direction transversale de la machine de levage.

Selon un mode de réalisation, l'invention fournit aussi un ensemble constitué d'un véhicule et d'une remorque telle que décrite précédemment.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 représente une vue en perspective schématique d'une remorque selon un premier mode de réalisation.
La figure 2 représente une vue de côté de la remorque selon le mode de réalisation de la figure 1 et d'une machine de levage.
La figure 3 représente une vue de côté de la remorque selon le mode de réalisation de la figure 1 et d'une machine de levage en cours d'installation sur la remorque.
La figure 4 représente une vue de côté de la remorque selon le mode de réalisation de la figure 1 portant la machine de levage.
La figure 5 représente une vue schématique en perspective de la remorque selon le mode de réalisation de la figure 1 portant la machine de levage.
La figure 6 représente une vue de côté d'une remorque selon un deuxième mode de réalisation et d'une machine de levage en cours d'installation sur la remorque.
La figure 7 représente une vue de côté d'une remorque selon le mode de réalisation de la figure 6, et d'une machine de levage en cours d'installation sur la remorque.
La figure 8 représente une vue de côté d'une remorque selon le mode de réalisation de la figure 6 portant la machine de levage.
La figure 9 représente une vue en perspective schématique d'une remorque selon un troisième mode de réalisation.
La figure 10 représente une vue de côté de la remorque selon le troisième mode de réalisation de la figure 9 portant la machine de levage.

### Description des modes de réalisation

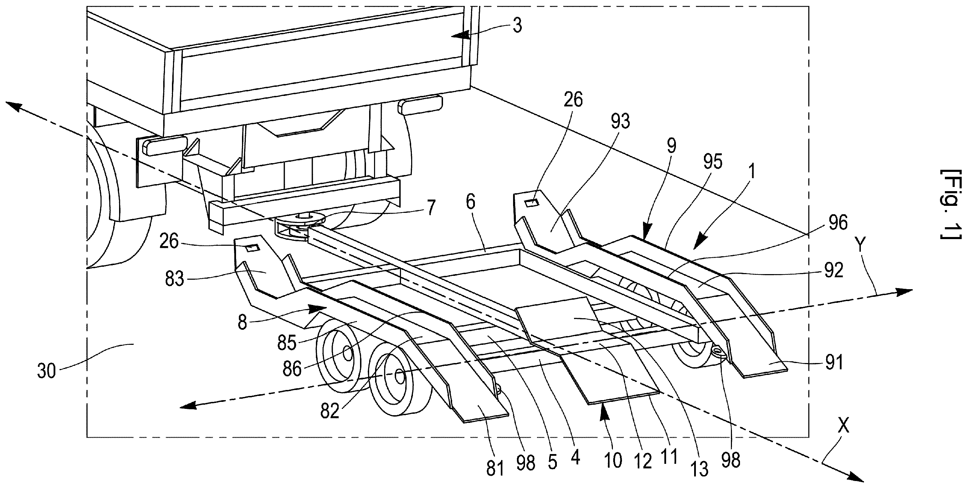

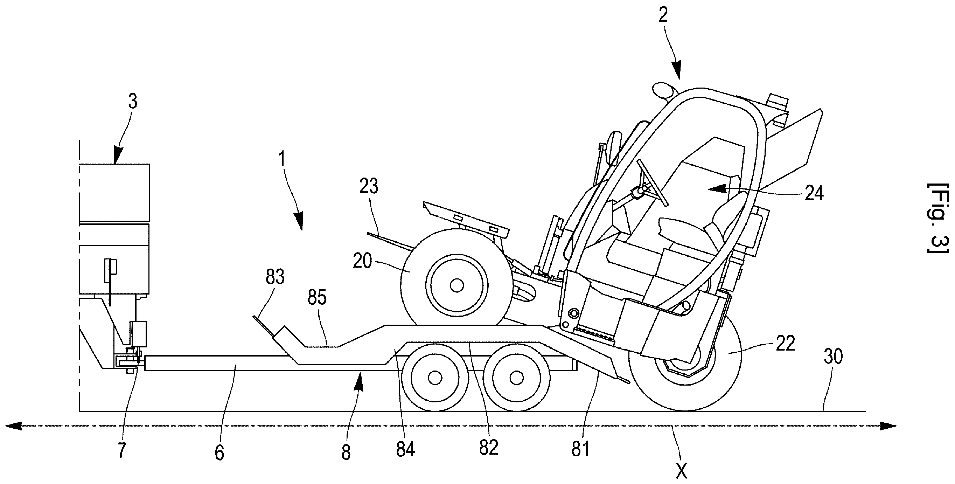

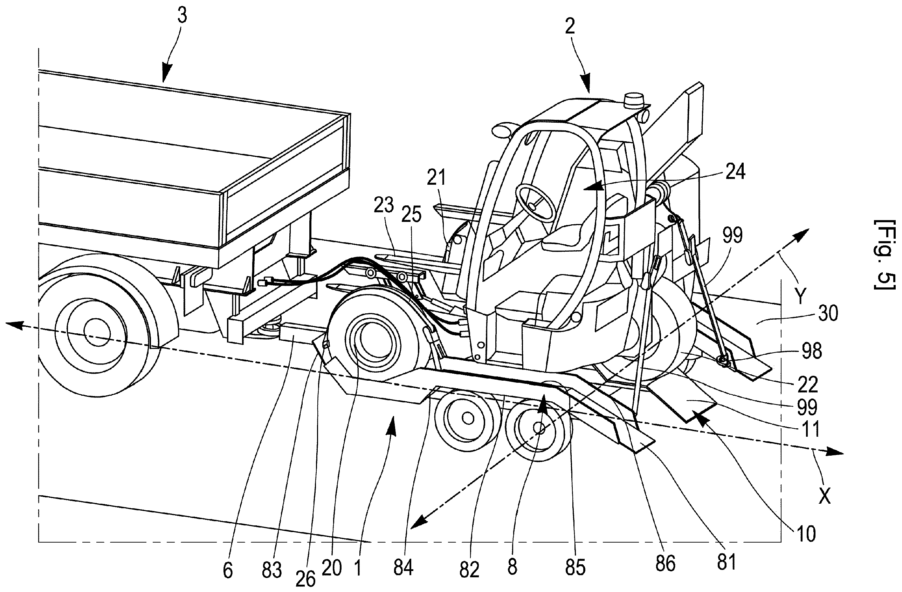

Il est illustré avec les figures 1 à 10 plusieurs modes de réalisation d'une remorque de transport, pour transporter une machine de levage 2 à trois roues.

Une machine de levage 2 adaptée pour être chargée sur la remorque est par exemple une machine de levage 2 comprenant un corps principal, une première roue 20 et une deuxième roue 21 espacée de la première roue 20 dans une direction transversale de la machine de levage 2. La première roue 20 et la deuxième roue 21 étant respectivement situées au niveau d'une première et d'une deuxième extrémités transversales de la machine de levage 2. La machine de levage 2 comprenant une troisième roue 22 indépendante espacée des première et deuxième roues 20,21 dans une direction longitudinale de la machine de levage 2. La troisième roue 22 étant située entre les premières roues 20, 21 dans la direction transversale de la machine de levage 2.

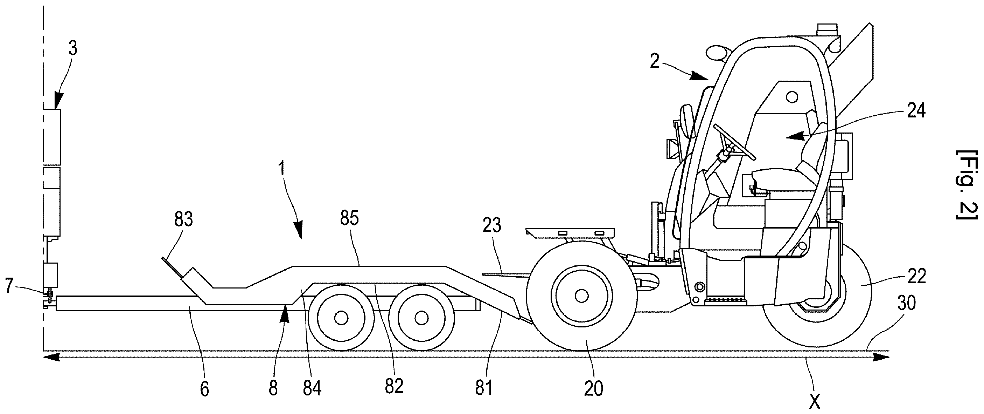

La machine de levage 2 illustrée sur les figures 2 à 8 et 10 est un chariot embarqué et comprend en outre les éléments classiques pour de tel chariot embarqué tels qu'une fourche de levage 23 et une cabine opérateur 24.

Une telle machine de levage 2 est par exemple choisie parmi des chariots embarqués vendues par la société Manitou^{®} avec la référence TMM tel que TMM 20, TMM 25 et avec la référence TMT tel que TMT 25I, TMT 25s, TMT 27P et TMT 27S.

Une remorque 1 selon un premier mode de réalisation est illustrée avec les figures 1 à 5.

La remorque 1 comprend un essieu arrière 4 et un essieu avant 5, deux rails latéraux 8,9 et un rail central 10, fixés sur un châssis 6.

La remorque 1 est attelée à un véhicule 3, par exemple à un camion via un crochet d'attelage 7 compris dans le châssis 6, au niveau d'une extrémité longitudinale avant de la remorque 1.

L'essieu arrière 4 et l'essieu avant 5 sont parallèles à une direction transversale Y et espacés selon la direction longitudinale X de la remorque 1. L'essieu arrière 4 comprend une première paire de roues espacées dans la direction transversale Y respectivement au niveau d'une première extrémité transversale et d'une deuxième extrémité transversale de la remorque 1. De manière similaire, l'essieu avant 5 comprend une deuxième paire de roues espacées dans la direction transversale Y respectivement au niveau de la première extrémité transversale et de la deuxième extrémité transversale de la remorque 1.

Le premier rail latéral 8 est situé au niveau d'une première extrémité transversale de la remorque 1 et orienté dans la direction longitudinale X. Le deuxième rail latéral 9 est parallèle au premier rail latéral 8 et est située au niveau d'une deuxième extrémité transversale de la remorque 1.

La largeur du premier et du deuxième rails est adaptée afin de recevoir respectivement la première roue 20 et la deuxième roue 21 de la machine de levage 2 comme cela est illustré avec les différentes étapes de chargement de la machine de levage 2 des figures 2 à 5.

Le premier et le deuxième rails latéraux comportent de manière successive depuis l'arrière vers l'avant de la remorque 1 : une rampe 81, 91 tournée vers l'arrière, en direction du sol 30, permettant d'engager une roue 20,21 de la machine de levage 2, comme illustré sur la figure 2 ; une portion plane 82, 92 située au-dessus des roues de la remorque 1 formant un garde-boue, une portion descendante 84 précédent une portion montante 83,93 pour former un berceau.

Le berceau est situé entre l'essieu avant 5 et l'extrémité longitudinale avant de la remorque et la rampe 81, 91 est située entre l'essieu arrière 4 et l'extrémité longitudinale arrière de la remorque 1.

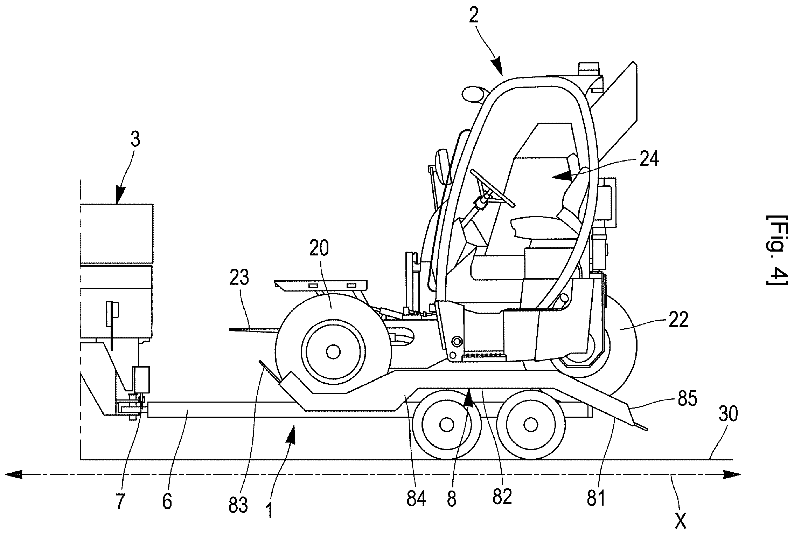

Le berceau permet de réceptionner et de stabiliser une roue 20,21 de la machine de levage 2 comme c'est illustré par exemple sur la figure 4. On observe sur cette figure 4 que la roue 20 est logée dans le berceau.

Ainsi, en cas de mouvement accidentel de la machine de levage 2 en direction de l'avant de la remorque 1, par exemple durant le transport de la machine de levage 2 chargée sur la remorque 1 et tractée par le véhicule 3, la roue 20 sera maintenue dans le berceau grâce à la portion montante 83 qui empêchera que la roue ne se dégage accidentellement du berceau.

De manière complémentaire, si un mouvement de la machine de levage 2 est en direction de l'arrière de la remorque 1, alors la roue 20 sera maintenue dans le berceau grâce à la portion descendante 84 qui empêchera que la roue 20 ne se dégage accidentellement du berceau. En effet, la roue 20 est logée dans le berceau en empruntant notamment la portion descendante 84. Ainsi, pour dégager la roue 20 en direction de l'arrière de la remorque, cette portion descendante est alors une pente ascendante pour la roue 20.

Le premier rail latéral 8 comprend un premier rebord 85 espacé d'un deuxième rebord 86 faisant chacun sailli depuis la rampe 81, la portion plane 82, la portion descendante 84 et la portion montante 83 en formant un couloir de réception pour la roue 20 de la machine de levage 2. De manière similaire, le deuxième rail latéral 9 comprend un premier rebord 95 espacé d'un deuxième rebord 96 faisant chacun sailli depuis la rampe 91, la portion plane 92, la portion descendante et la portion montante 93 en formant un couloir de réception pour la roue 21 de la machine de levage 2.

On observe sur les figures 2 à 5 des étapes de chargement de la machine de levage 2. Durant le chargement de la machine de levage 2, les roue 20,21 progressent respectivement dans le couloir jusqu'à ce que les roues 20,21 soient logées dans le berceau. Des moyens d'ancrage sont prévues pour renforcer l'immobilisation de la machine de levage 2 sur la remorque 1, par exemple via des sangles d'arrimage 25, et 99 attachées aux rails latéraux 8, 9. Les sangles d'arrimage 25 traversent des orifices 26 ménagés à l'avant des rails latéraux 8, 9 pour arrimer les roues avant 20 dans les berceaux des rails latéraux 8, 9. Les sangles 99 attachent le corps de la machine 2 à des pattes 98 fixées aux rebords 86 et 96 des rails latéraux 8, 9.

Le rail central 10 est situé à mi-distance entre le premier rail latéral 8 et le deuxième rail latéral 9. Le rail central 10 présente une largeur adaptée pour recevoir la troisième roue 22 de la machine de levage 2.

Le rail central 10 est situé au niveau de l'arrière de la remorque 1 c'est-à-dire entre l'essieu avant 5 et l'extrémité longitudinale arrière de la remorque 1.

Le rail central 10 comprend, successivement depuis l'extrémité longitudinale arrière de la remorque 1 en direction de l'extrémité longitudinale avant de la remorque 1 : une rampe 11 tournée vers l'arrière, en direction du sol 30, permettant d'engager la roue indépendante 22 de la machine de levage 2 ; une portion plane 12 fixée à l'essieu arrière 4 et la portion montante 13.

L'angle entre la portion plane 12 et la rampe 11 tournée vers le sol 30 est d'environ 135°C. L'angle entre la portion plane 12 et la portion montante 13 tourné dans la direction opposée du sol 30 est d'environ 135 degrés.

Selon une variante de réalisation non illustrée, le rail central présente les caractéristiques d'un des deux rails latéraux 8,9 présenté sur les figures 1 à 5 et les deux rails latéraux présentent les caractéristiques du rail central 10 présenté sur les figures 1 à 5. Dans ce mode de réalisation, les deux rails latéraux présentant les caractéristiques du rail central sont prolongés vers l'avant afin de chevaucher afin de former des garde-boues chevauchant les roues.

Selon cette variante, la machine de levage 2 est alors chargée sur la remorque en marche arrière, c'est-à-dire que la roue arrière va être positionnée sur le rail central avant les deux premières roues qui s'engageront ensuite sur un des deux rails latéraux.

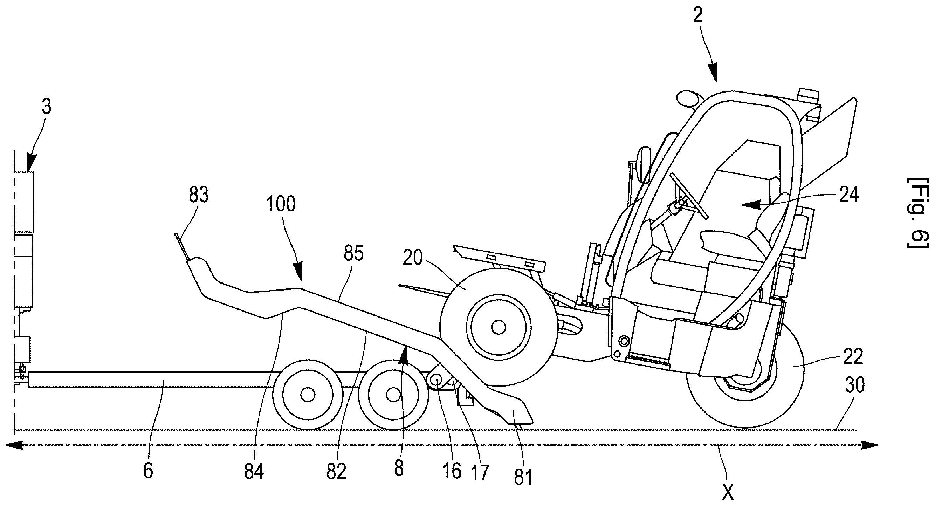

Une remorque 100 de transport selon un autre mode de réalisation est illustrée avec les figures 6 à 8.

La remorque 100 diffère du premier mode de réalisation décrit avec les figures 1 à 5 en ce que le premier rail latéral 8, le deuxième rail latéral 9 et le rail central 10 sont montés à pivot sur le châssis 6.

L'axe de pivotement 16 des rails latéraux 8,9 et l'axe de pivotement 17 du rail central 10 est situé dans le châssis 6, au niveau de l'arrière de la remorque 100, entre l'essieu arrière 4 et l'extrémité arrière de la remorque 100.

L'axe de pivotement 16 des rails latéraux 8,9 permet d'incliner les premier et deuxième rails latéraux 8,9. De manière similaire, l'axe de pivotement 17 du rail central 10 permet d'incliner l'extrémité arrière de la rampe 11 du rail central 10 en direction du sol 30.

Les positions de l'axe de pivotement 16 des rails latéraux 8,9 et de l'axe de pivotement 17 du rail central 10 sont avantageuses en ce qu'elles facilitent le chargement de la machine de levage 2.

En effet, comme illustré sur les différentes étapes de chargement présentées sur les figures 6 à 9, lorsque la machine de levage 2 commence à être chargée sur la remorque 100, le premier rail latéral 8 et le deuxième rail latéral 9 sont dans une position inclinée positionnant l'extrémité arrière de la rampe 81,91 sur le sol 30 pour engager plus facilement les roues 20,21 de la machine de levage 2 sur les rampe 81,91 comme illustré sur la figure 6.

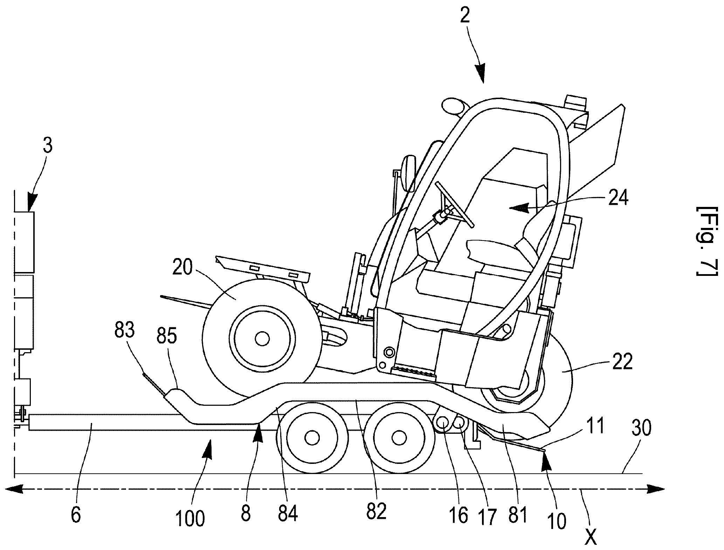

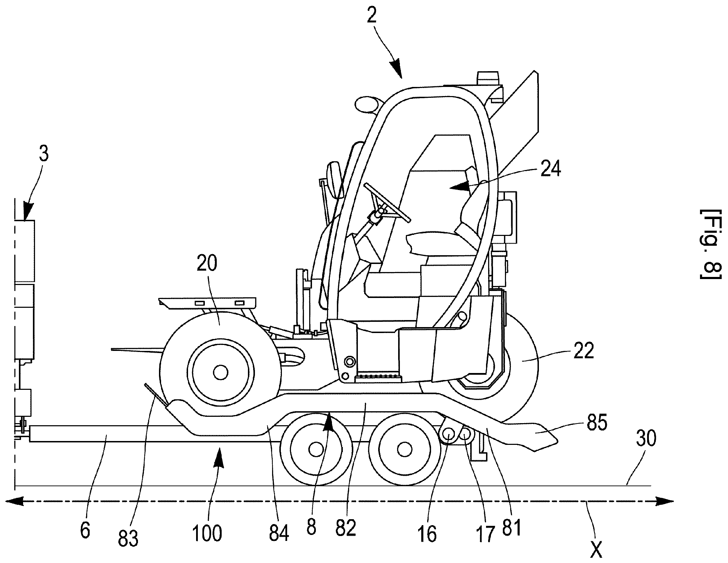

Lorsque la machine de levage 2 progresse davantage sur les deux rails latéraux 8,9, comme illustré sur les figures 7 et 8, la troisième roue 22 de la machine de levage 2 s'engage facilement sur la rampe 11 du rail central 10 en position inclinée.

Le poids de la machine de levage exercé sur l'avant de la remorque 100 entraine le basculement des deux rails latéraux 8,9 depuis une position inclinée vers une position redressée dans laquelle le berceau prend appuis sur l'essieu 6. De manière similaire, le rail central 10 bascule depuis la position inclinée vers la position redressée, comme illustré sur la figure 8.

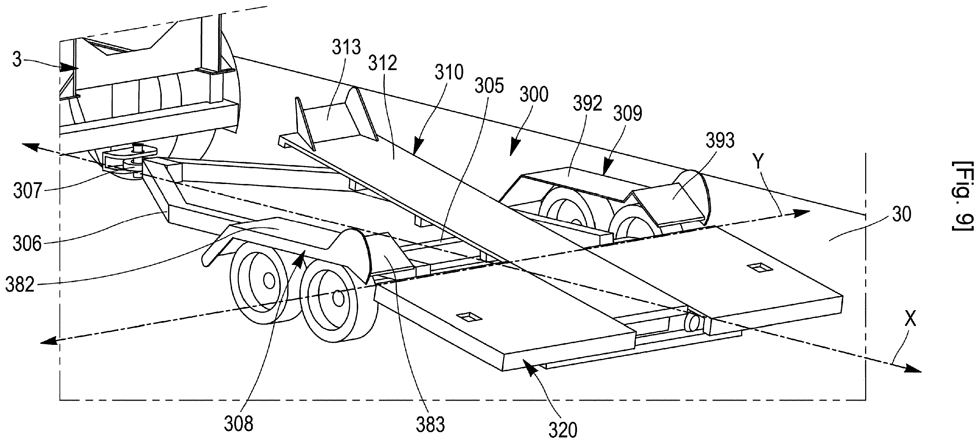

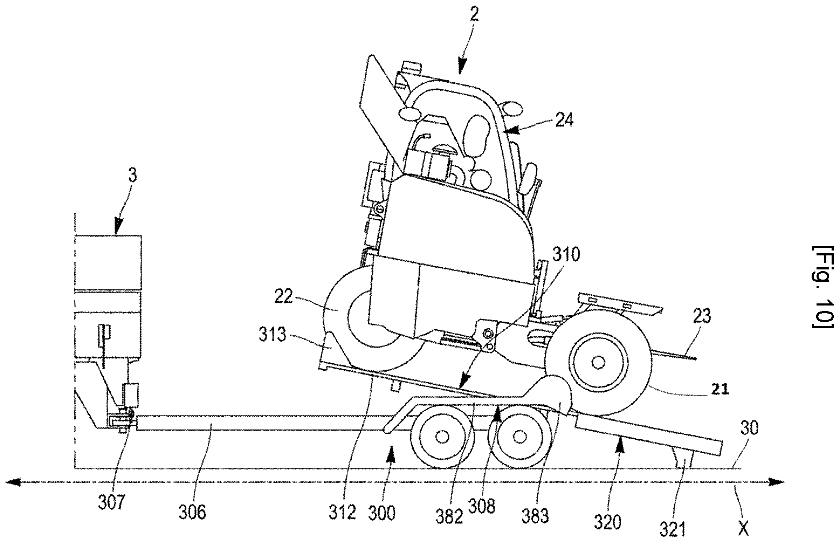

Une remorque 300 de transport selon un autre mode de réalisation est illustrée avec les figures 9 et 10.

De manière similaire au mode de réalisation de la remorque 1 illustrée sur les figure 1 à 5, la remorque 300 illustrée sur les figures 6 et 7 est attelée à un véhicule via un crochet d'attelage 307 compris dans un châssis 306, au niveau d'une extrémité longitudinale avant de la remorque 300.

La remorque 300 comprend un essieu arrière (non visible sur les figures 9 et 10), un essieu avant 305, deux rails latéraux 308,309, un rail central 310, et un plateau d'engagement 320 fixés sur le châssis 306.

Le plateau d'engagement 320 est situé à l'arrière de la remorque et est fixé d'une manière solidaire au rail central 310.

Le plateau d'engagement 320 s'étend selon la direction transversale Y sur toute largeur de la remorque 300. Le plateau d'engagement est monté à pivot avec le rail central 310 au niveau d'une extrémité arrière du châssis 306 pour permettre son inclinaison en direction du sol 30, afin d'engager facilement les roues de la machine de levage 2.

Le plateau d'engagement 320 présente une cale 321 faisant saillie en direction du sol 30 qui est destinée à prendre appuis contre le sol 30 lorsque le plateau d'engagement 320 est incliné en direction du sol 30.

Chacun des rails latéraux 308,309 comporte successivement depuis le plateau d'engagement 320 : une portion montante 383, 393 et une portion plane 382,392 située au-dessus des roues de la remorque 300.

Le rail central 310 comporte, successivement depuis le plateau d'engagement en direction de l'extrémité longitudinale avant de la remorque, la portion plane 312 et la portion montante 313. La portion montante 313 est située au niveau de l'avant de la remorque 300, entre l'extrémité avant de la remorque 300 et l'essieu avant 305.

Selon cette configuration, la machine de levage 2 est chargée sur la remorque 300 en marche arrière, c'est-à-dire que la roue arrière va être positionnée sur le plateau d'engagement 320 puis sur le rail central 310 avant les deux premières roues qui s'engageront ensuite sur le plateau d'engagement 320 puis sur un des deux rails latéraux 308,309, comme illustré sur la figure 10. En outre, le poids de la machine de levage 2 positionnée sur la remorque 300 va entrainer le basculement du rail central 310 sur le châssis 306 et donc le basculement du plateau d'engagement 320 dans une position redressée, dans laquelle le plateau d'engagement 320 ne touche plus le sol 30.

Selon une variante de réalisation non illustrée, le rail central présente les caractéristiques d'un des deux rails latéraux 308, 309 présentés sur les figures 9 et 10 et les deux rails latéraux présentent les caractéristiques du rail central 310 présenté sur les figures 9 et 10. Dans ce mode de réalisation, les deux rails latéraux présentant les caractéristiques du rail central 310 sont surélevés afin de former des garde-boues chevauchant les roues.

Selon cette configuration, la machine de levage 2 est chargée sur la remorque en marche avant, c'est-à-dire que les deux premières roues vont chacune s'engager sur le plateau d'engagement puis sur un rail latéral puis la roue arrière va ensuite être positionnée sur le rail central.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Remorque (1, 100, 300) de transport pour transporter une machine de levage (2), la machine de levage comprenant deux premières roues (20, 21) espacées dans une direction transversale de la machine de levage et une troisième roue (22) espacée des premières roues dans une direction longitudinale de la machine de levage et située entre les premières roues dans la direction transversale de la machine de levage, la remorque comprenant :
- au moins un essieu (4, 5) comportant au moins deux roues espacées dans une direction transversale (Y) de la remorque,
- un châssis (6, 306) porté par l'au moins un essieu, le châssis étant muni d'un crochet d'attelage (7) disposé à une extrémité longitudinale avant de la remorque et destiné à être attelé à un véhicule (3),
- deux rails latéraux (8, 308, 9, 309) espacés dans la direction transversale de la remorque et montés sur le châssis de manière à chevaucher respectivement lesdites roues de la remorque, les deux rails latéraux étant destinés à supporter respectivement les deux premières roues de la machine de levage, et
- un rail central (10, 310) monté sur le châssis, le rail central étant situé entre les deux rails latéraux et destiné à supporter la troisième roue de la machine de levage,
dans laquelle chacun des deux rails latéraux s'étend selon une direction longitudinale (X) de la remorque et comporte une portion plane (82, 382, 92,392) formant un garde-boue au-dessus d'une dite roue de la remorque et une portion montante (83, 383, 93, 393) pour arrêter une dite première roue de la machine de levage en direction de l'extrémité longitudinale avant de la remorque,
dans laquelle le rail central comporte dans une direction longitudinale de la remorque : une portion plane (12, 312) pour supporter la troisième roue de la machine de levage et une portion montante (13,313) pour arrêter la troisième roue de la machine de levage en direction de l'extrémité longitudinale avant de la remorque,
la remorque étant **caractérisée en ce que** le rail central (10, 310) est espacé des deux rails latéraux (8, 308, 9, 309) dans la direction transversale de la remorque.

2. Remorque selon la revendication 1, dans laquelle chacun des deux rails latéraux (8, 9) comporte successivement, depuis une extrémité longitudinale arrière de la remorque (1, 100) en direction de l'extrémité longitudinale avant de la remorque : une rampe (81, 91) tournée vers l'arrière destinée à engager une dite première roue (20, 21) de la machine de levage (2), la portion plane(82, 92) et la portion montante (83, 93) et dans laquelle le rail central (10) comporte successivement depuis une extrémité longitudinale arrière de la remorque en direction de l'extrémité longitudinale avant de la remorque une rampe (11) tournée vers l'arrière destinée à engager la roue indépendante (22), la portion plane (12) et la portion montante (13).

3. Remorque selon la revendication 2, dans laquelle chacun des deux rails latéraux (8, 9) est monté à pivot sur le châssis (6), la rampe (81, 91) tournée vers l'arrière étant destinée à prendre appui sur le sol (30) dans une position inclinée du rail latéral et à être élevée au-dessus du sol dans une position redressée du rail latéral.

4. Remorque selon la revendication 2 ou 3, dans laquelle la rampe du rail latéral (81, 91) présente une orientation inclinée par rapport à la portion plane (82, 92) du rail latéral.

5. Remorque selon l'une des revendications 2 à 4, dans laquelle le rail central (10) est monté à pivot sur le châssis (6), la rampe (11) tournée vers l'arrière étant destinée à prendre appui sur le sol (30) dans une position inclinée du rail central et à être élevée au-dessus du sol dans une position redressée du rail central.

6. Remorque selon l'une des revendications 2 à 5, dans laquelle la rampe (11) présente une orientation inclinée par rapport à la portion plane (12) du rail central (10).

7. Remorque selon la revendication 1, comportant un plateau d'engagement (320) lié à une extrémité longitudinale arrière du châssis (306), le plateau d'engagement s'étendant selon la direction transversale (Y) sur toute largeur de la remorque afin de permettre l'engagement des premières roues (20, 21) sur respectivement le premier rail latéral (308) et le deuxième rail latéral (309) et permettre l'engagement de la troisième roue (22) sur le rail central (310).

8. Remorque selon la revendication 7, dans laquelle chacun des deux rails latéraux (308, 309) comporte, successivement depuis le plateau d'engagement (320) en direction de l'extrémité longitudinale avant de la remorque (300), la portion montante (383, 393) et la portion plane (382, 392) et dans laquelle le rail central (310) comporte, successivement depuis le plateau d'engagement en direction de l'extrémité longitudinale avant de la remorque, la portion plane (312) et la portion montante (313).

9. Remorque selon la revendication 7, dans laquelle chacun des deux rails latéraux comporte, successivement depuis le plateau d'engagement en direction de l'extrémité longitudinale avant de la remorque, la portion plane et la portion montante et dans laquelle le rail central comporte, successivement depuis le plateau d'engagement en direction de l'extrémité longitudinale avant de la remorque, la portion plane et la portion montante.

10. Remorque selon l'une des revendications 7 à 9, dans laquelle le plateau d'engagement (320) est monté à pivot sur le châssis (306) de manière à permettre l'abaissement et le levage dudit plateau d'engagement afin de faciliter le chargement et le déchargement de la machine de levage (2).

11. Remorque selon la revendication 10, dans laquelle le rail central (310) est solidaire du plateau d'engagement (320) pour pivoter avec le plateau d'engagement.

12. Remorque selon la revendication 10 ou 11, dans laquelle chacun des deux rails latéraux est solidaire du plateau d'engagement (320) pour pivoter avec le plateau d'engagement.

13. Remorque selon l'une des revendications 1 à 12, dans laquelle au moins une des portions montantes (13, 313, 83, 93, 383, 393) est précédée d'une portion descendante (84) en direction de l'extrémité longitudinale avant de la remorque (1, 100, 300) pour former un berceau destiné à recevoir une dite roue (20,21) de la machine de levage (2) dans une position stable.

14. Remorque selon l'une des revendications 1 à 13, dans laquelle chacun des deux rails latéraux (8, 308, 9, 309) comporte un premier rebord longitudinal (85, 95) espacé d'un deuxième rebord longitudinal (86, 96), le premier rebord longitudinal et le deuxième rebord longitudinal faisant chacun saillie depuis la portion plane (82, 382, 92, 392) et la portion montante (83, 383, 93, 393) et formant un couloir de réception pour une dite première roue (20, 21) de la machine de levage (2).

15. Remorque selon l'une des revendications 1 à 14, dans laquelle chacun des deux rails latéraux (8, 308, 9, 309) comporte des ancrages (26, 98) pour ancrer des sangles d'arrimage (25, 99) destinées à maintenir la machine de levage (2) sur la remorque (1, 100, 300).

16. Remorque selon l'une des revendications 1 à 15, la remorque (1, 100, 300) présentant une masse inférieure à 1000 kg, préférentiellement comprise entre 400 kg et 900 kg, plus préférentiellement d'environ 600 kg.

17. Remorque selon l'une des revendications 1 à 16, dans laquelle la portion montante (83, 93) de chacun des deux rails latéraux (8, 9) est située entre l'essieu (4, 5) et l'extrémité longitudinale avant de la remorque (1, 100), la portion montante (13) du rail central (10) étant située vers l'arrière de la remorque par rapport à la portion montante de chacun des deux rails latéraux.

18. Remorque selon l'une des revendications 1 à 16, dans laquelle la portion montante (383) du rail central (310) est située entre l'essieu (305) et l'extrémité longitudinale avant de la remorque (300), la portion montante de chacun des deux rails latéraux (308, 309) étant située vers l'arrière de la remorque par rapport à la portion montante (313) du rail central (310).

19. Ensemble constitué d'une remorque (1, 100, 300) selon l'une des revendications 1 à 18 et d'une machine de levage (2) portée par la remorque, la machine de levage comprenant deux premières roues (20, 21) espacées dans une direction transversale de la machine de levage et une troisième roue (22) espacée des premières roues dans une direction longitudinale de la machine de levage et située entre les premières roues dans la direction transversale de la machine de levage.

## Patentansprüche

1. Transportanhänger (1, 100, 300) zum Transportieren einer Hebemaschine (2), wobei die Hebemaschine umfasst zwei erste Räder (20, 21), die in Querrichtung der Hebemaschine beabstandet sind, und ein drittes Rad (22) , das in Längsrichtung der Hebemaschine von den ersten Rädern beabstandet ist und sich in Querrichtung der Hebemaschine zwischen den ersten Rädern befindet, wobei der Anhänger umfasst:
- mindestens eine Achse (4, 5) umfassend mindestens zwei Räder, die in einer Querrichtung (Y) des Anhängers beabstandet sind,
- ein Rahmen (6, 306), der von mindestens einer Achse getragen wird, wobei der Rahmen mit einer Anhängerkupplung (7) versehen ist, die an einem vorderen Längsende des Anhängers angeordnet ist und dazu bestimmt ist, an ein Fahrzeug (3) ankuppelbar zu sein,
- zwei Seitenschienen (8, 308, 9, 309), die in Querrichtung des Anhängers beabstandet und so am Fahrgestell angebracht sind, dass sie jeweils die genannten Räder des Anhängers überlappen, wobei die beiden Seitenschienen dazu bestimmt sind, jeweils die ersten beiden Räder der Hebevorrichtung zu tragen, und
- eine am Fahrgestell montierte Mittelschiene (10, 310), wobei sich die Mittelschiene zwischen den beiden Seitenschienen befindet und dazu bestimmt ist, das dritte Rad der Hebemaschine zu tragen,
wobei sich jede der beiden Seitenschienen in Längsrichtung (X) des Anhängers erstreckt und einen flachen Abschnitt (82, 382, 92, 392), der einen Kotflügel über einem der Räder des Anhängers bildet, und einen ansteigenden Abschnitt (83, 383, 93, 393) aufweist, um ein erstes Rad der Hebevorrichtung in Richtung des vorderen Längsendes des Anhängers zu arretieren,
wobei die Mittelschiene in Längsrichtung des Anhängers umfasst:
einen flachen Abschnitt (12, 312) zum Tragen des dritten Rades der Hebemaschine und einen ansteigenden Abschnitt (13, 313) zum Arretieren des dritten Rades der Hebemaschine in Richtung des vorderen Längsendes des Anhängers,
wobei der Anhänger **dadurch gekennzeichnet ist, dass** die Mittelschiene (10, 310) in Querrichtung des Anhängers von den beiden Seitenschienen (8, 308, 9, 309) in Querrichtung des Anhängers beabstandet ist.

2. Anhänger gemäß Anspruch 1, wobei jede der beiden Seitenschienen (8, 9) nacheinander, von einem hinteren Längsende des Anhängers (1, 100) in Richtung des vorderen Längsendes des Anhängers, umfasst: eine nach hinten gerichtete Rampe (81, 91) bestimmt dazu, ein erstes Rad (20, 21) der Hebemaschine (2) in Eingriff zu nehmen, den flachen Abschnitt (82, 92) und den ansteigenden Abschnitt (83, 93), wobei die mittlere Schiene (10) nacheinander von einem hinteren Längsende des Anhängers in Richtung des vorderen Längsendes des Anhängers umfasst eine nach hinten gekehrte Rampe (11) bestimmt für den Eingriff mit dem unabhängigen Rad (22), dem flachen Abschnitt (12) und dem ansteigenden Abschnitt (13).

3. Anhänger gemäß Anspruch 2, wobei jede der beiden Seitenschienen (8, 9) schwenkbar am Rahmen (6) gelagert ist, wobei die nach hinten gerichtete Rampe (81, 91) dazu bestimmt ist, sich in einer geneigten Stellung der Seitenschiene auf dem Boden (30) abzustützen und in einer aufgerichteten Stellung der Seitenschiene über den Boden anhebbar zu sein.

4. Anhänger gemäß Anspruch 2 oder 3, wobei die Rampe der Seitenschiene (81, 91) gegenüber dem ebenen Abschnitt (82, 92) der Seitenschiene eine geneigte Ausrichtung aufweist.

5. Anhänger gemäß einem der Ansprüche 2 bis 4, wobei die Mittelschiene (10) schwenkbar am Rahmen (6) angebracht ist, wobei die nach hinten gerichtete Rampe (11) dazu bestimmt ist, in einer geneigten Stellung der Mittelschiene auf dem Boden (30) aufzuliegen und in einer aufrechten Stellung der Mittelschiene über den Boden anhebbar zu sein.

6. Anhänger gemäß einem der Ansprüche 2 bis 5, wobei die Rampe (11) gegenüber dem ebenen Abschnitt (12) der Mittelschiene (10) eine geneigte Ausrichtung aufweist.

7. Anhänger gemäß Anspruch 1, der eine Einrastplatte (320) aufweist, die an einem hinteren Längsende des Rahmens (306) befestigt ist, wobei sich die Einrastplatte in Querrichtung (Y) über die gesamte Breite des Anhängers erstreckt, um das Einrasten der ersten Räder (20, 21) in jeweils die erste Seitenschiene (308) und die zweite Seitenschiene (309) sowie das Einrasten des dritten Rades (22) in die Mittelschiene (310) zu ermöglichen.

8. Anhänger gemäß Anspruch 7, wobei jede der beiden Seitenschienen (308, 309) nacheinander von der Einrastplatte (320) in Richtung des vorderen Längsendes des Anhängers (300) den ansteigenden Abschnitt (383, 393) und den flachen Abschnitt (382, 392) umfasst und wobei die Mittelschiene (310) nacheinander von der Einrastplatte in Richtung des vorderen Längsendes des Anhängers den flachen Abschnitt (312) und den ansteigenden Abschnitt (313) umfasst.

9. Anhänger gemäß Anspruch 7, wobei jede der beiden Seitenschienen, ausgehend von der Einrastplatte in Richtung des vorderen Längsendes des Anhängers, nacheinander den flachen Abschnitt und den ansteigenden Abschnitt umfasst und wobei die Mittelschiene, ausgehend von der Einrastplatte in Richtung des vorderen Längsendes des Anhängers, nacheinander den flachen Abschnitt und den ansteigenden Abschnitt umfasst.

10. Anhänger gemäß einem der Ansprüche 7 bis 9, wobei die Einrastplatte (320) schwenkbar am Fahrgestell (306) angebracht ist, um das Absenken und Anheben der Einrastplatte zu ermöglichen und so das Be- und Entladen der Hebemaschine (2) zu erleichtern.

11. Anhänger gemäß Anspruch 10, wobei die Mittelschiene (310) fest mit der Einrastplatte (320) verbunden ist, um sich gemeinsam mit dieser zu drehen.

12. Anhänger gemäß Anspruch 10 oder 11, wobei jede der beiden Seitenschienen fest mit der Einrastplatte (320) verbunden ist, um sich gemeinsam mit dieser zu drehen.

13. Anhänger gemäß einem der Ansprüche 1 bis 12, wobei mindestens einem der ansteigenden Abschnitte (13, 313, 83, 93, 383, 393) von einem in Richtung des vorderen Längsendes des Anhängers (1, 100, 300) ein abfallender Abschnitt (84) vorausgeht, um eine Aussparung zu bilden, die dazu bestimmt ist, ein solches Rad (20, 21) der Hebevorrichtung (2) in einer stabilen Position aufzunehmen.

14. Anhänger gemäß einem der Ansprüche 1 bis 13, wobei jede der beiden Seitenschienen (8, 308, 9, 309) einen ersten Längsrand (85, 95) umfasst, der von einem zweiten Längsrand (86, 96) beabstandet ist, wobei der erste Rand und der zweite Rand jeweils von dem flachen Abschnitt (82, 382, 92, 392) und dem ansteigenden Abschnitt (83, 383, 93, 393) vorstehen und einen Aufnahmekorridor für ein erstes Rad (20, 21) der Hebemaschine (2) bilden.

15. Anhänger gemäß einem der Ansprüche 1 bis 14, wobei jede der beiden Seitenschienen (8, 308, 9, 309) Verankerungen (26, 98) zum Verankern von Zurrgurten (25, 99), die dazu bestimmt sind, die Hebemaschine (2) auf dem Anhänger (1, 100, 300) zu halten, umfasst.

16. Anhänger gemäß einem der Ansprüche 1 bis 15, wobei der Anhänger (1, 100, 300) eine Masse von weniger als 1000 kg aufweist, vorzugsweise zwischen 400 kg und 900 kg, weiter bevorzugt etwa 600 kg.

17. Anhänger gemäß einem der Ansprüche 1 bis 16, wobei sich der ansteigende Abschnitt (83, 93) jeder der beiden Seitenschienen (8, 9) zwischen der Achse (4, 5) und dem vorderen Längsende des Anhängers (1, 100) befindet, wobei der ansteigende Abschnitt (13) der Mittelschiene (10) im Vergleich zu dem ansteigenden Abschnitt jeder der beiden Seitenschienen zum hinteren Ende des Anhängers hin angeordnet ist.

18. Anhänger gemäß einem der Ansprüche 1 bis 16, wobei sich der ansteigende Abschnitt (383) der Mittelschiene (310) zwischen der Achse (305) und dem vorderen Längsende des Anhängers (300) befindet, wobei sich der ansteigende Abschnitt jeder der beiden Seitenschienen (308, 309) im Verhältnis zum ansteigenden Abschnitt (313) der Mittelschiene (310) zum Heck des Anhängers hin befindet.

19. Gruppe, bestehend aus einem Anhänger (1, 100, 300) gemäß einem der Ansprüche 1 bis 18 und einer von dem Anhänger getragenen Hebemaschine (2), wobei die Hebemaschine zwei erste Räder (20, 21), die in Querrichtung der Hebemaschine voneinander beabstandet sind, und ein drittes Rad (22) umfasst, das in Längsrichtung der Hebemaschine von den ersten Rädern beabstandet ist und in Querrichtung der Hebemaschine zwischen den ersten Rädern angeordnet ist.

## Claims

1. Transport trailer (1, 100, 300) for transporting a lifting machine (2), the lifting machine comprising two first wheels (20, 21) spaced apart in a transverse direction of the lifting machine and a third wheel (22) spaced apart from the first wheels in a longitudinal direction of the lifting machine and located between the first wheels in the transverse direction of the lifting machine, the trailer comprising:
- at least one axle (4, 5) comprising at least two wheels spaced apart in a transverse direction (Y) of the trailer,
- a chassis (6, 306) carried by the at least one axle, the chassis being provided with a towbar (7) disposed at a front longitudinal end of the trailer and intended to be coupled to a vehicle (3),
- two side rails (8, 308, 9, 309) spaced apart in the transverse direction of the trailer and mounted on the chassis, so as to overlap respectively said wheels of the trailer, the two side rails being intended to support respectively the first two wheels of the lifting machine, and
- a central rail (10, 310) mounted on the chassis, the central rail being located between the two side rails and intended to support the third wheel of the lifting machine, wherein each of the two side rails extend along a longitudinal direction (X) of the trailer and comprise a flat portion (82, 382, 92, 392) forming a mudguard above a said wheel of the trailer and a rising portion (83, 383, 93, 393) to stop a said first wheel of the lifting machine in the direction of the front longitudinal end of the trailer,
wherein the central rail comprises, in a longitudinal direction of the trailer: a flat portion (12, 312) to support the third wheel of the lifting machine and a rising portion (13, 313) to stop the third wheel of the lifting machine in the direction of the front longitudinal end of the trailer, the trailer being **characterised in that** the central rail (10, 310) is spaced apart from the two side rails (8, 308, 9, 309) in the transverse direction of the trailer.

2. Trailer according to claim 1, wherein each of the two side rails (8, 9) comprise successively, from a rear longitudinal end of the trailer (1, 100) in the direction of the front longitudinal end of the trailer: a ramp (81, 91) rotated rearwards, intended to engage a said first wheel (20, 21) of the lifting machine (2), the flat portion (82, 92) and the rising portion (83, 93), and wherein the central rail (10) comprises successively from a rear longitudinal end of the trailer in the direction of the front longitudinal end of the trailer, a ramp (11) rotated rearwards, intended to engage the independent wheel (22), the flat portion (12) and the rising portion (13).

3. Trailer according to claim 2, wherein each of the two side rails (8, 9) are pivotingly mounted on the chassis (6), the ramp (81, 91) rotated rearwards, being intended to bear on the ground (30) in an inclined position of the side rail, and to be raised above the ground in a straightened position of the side rail.

4. Trailer according to claim 2 or 3, wherein the ramp of the side rail (81, 91) has an inclined orientation with respect to the flat portion (82, 92) of the side rail.

5. Trailer according to any one of claims 2 to 4, wherein the central rail (10) is pivotingly mounted on the chassis (6), the ramp (11) rotated rearwards, being intended to bear on the ground (30) in an inclined position of the central rail, and to be raised above the ground in a straightened position of the central rail.

6. Trailer according to any one of claims 2 to 5, wherein the ramp (11) has an inclined orientation with respect to the flat portion (12) of the central rail (10).

7. Trailer according to claim 1, comprising an engagement plate (320) linked to a rear longitudinal end of the chassis (306), the engagement plate extending along the transverse direction (Y) over the entire width of the trailer, in order to enable the engagement of the first wheels (20, 21) on respectively the first side rail (308) and the second side rail (309) and enable the engagement of the third wheel (22) on the central rail (310).

8. Trailer according to claim 7, wherein each of the two side rails (308, 309) comprise, successively from the engagement plate (320) in the direction of the front longitudinal end of the trailer (300), the rising portion (383, 393) and the flat portion (382, 392), and wherein the central rail (310) comprises, successively from the engagement plate in the direction of the front longitudinal end of the trailer, the flat portion (312) and the rising portion (313).

9. Trailer according to claim 7, wherein each of the two side rails comprise, successively from the engagement plate in the direction of the front longitudinal end of the trailer, the flat portion and the rising portion, and wherein the central rail comprises, successively from the engagement plate in the direction of the front longitudinal end of the trailer, the flat portion and the rising portion.

10. Trailer according to any one of claims 7 to 9, wherein the engagement plate (320) is pivotingly mounted on the chassis (306), so as to enable the lowering and the lifting of said engagement plate, in order to facilitate the loading and the unloading of the lifting machine (2).

11. Trailer according to claim 10, wherein the central rail (310) is secured to the engagement plate (320) to pivot with the engagement plate.

12. Trailer according to claim 10 or 11, wherein each of the two side rails are secured to the engagement plate (320) to pivot with the engagement plate.

13. Trailer according to any one of claims 1 to 12, wherein at least one of the rising portions (13, 313, 83, 93, 383, 393) is preceded by a descending portion (84) in the direction of the front longitudinal end of the trailer (1, 100, 300) to form a cradle, intended to receive a said wheel (20, 21) of the lifting machine (2) in a stable position.

14. Trailer according to any one of claims 1 to 13, wherein each of the two side rails (8, 308, 9, 309) comprise a first longitudinal rim (85, 95) spaced apart from a second longitudinal rim (86, 96), the first longitudinal rim and the second longitudinal rim each projecting from the flat portion (82, 382, 92, 392) and the rising portion (83, 383, 93, 393) and forming a receiving passage for a said first wheel (20, 21) of the lifting machine (2).

15. Trailer according to any one of claims 1 to 14, wherein each of the two side rails (8, 308, 9, 309) comprise anchorings (26, 98) to anchor stowage straps (25, 99) intended to hold the lifting machine (2) on the trailer (1, 100, 300).

16. Trailer according to any one of claims 1 to 15, the trailer (1, 100, 300) having a mass less than 1000kg, preferably between 400kg and 900kg, more preferably around 600kg.

17. Trailer according to any one of claims 1 to 16, wherein the rising portion (83, 93) of each of the two side rails (8, 9) are located between the axle (4, 5) and the front longitudinal end of the trailer (1, 100), the rising portion (13) of the central rail (10) being located towards the rear of the trailer with respect to the rising portion of each of the two side rails.

18. Trailer according to any one of claims 1 to 16, wherein the rising portion (383) of the central rail (310) is located between the axle (305) and the front longitudinal end of the trailer (300), the rising portion of each of the two side rails (308, 309) being located towards the rear of the trailer with respect to the rising portion (313) of the central rail (310).

19. Assembly consisting of a trailer (1, 100, 300) according to any one of claims 1 to 18, and a lifting machine (2) carried by the trailer, the lifting machine comprising two first wheels (20, 21) spaced apart in a transverse direction of the lifting machine, and a third wheel (22) spaced apart from the first wheels in a longitudinal direction of the lifting machine and located between the first wheels in the transverse direction of the lifting machine.
